# EUROPÄISCHE PATENTSCHRIFT

(11) **EP 0 377 060 B1**
(45) Veröffentlichungstag und Bekanntmachung des Hinweises auf die Patenterteilung: **18.08.1993**
(21) Anmeldenummer: 89100032.5
(22) Anmeldetag: 03.01.1989
(51) Int. Cl.: B27G 13/04, B02C 18/18, B23C 5/22

(54) **Umlaufendes Schneidwerkzeug, insbesondere zum Stranggranulieren von Kunststoffen**
Rotating cutter, in particular for granulating strands of plastic material
Outil de coupe rotatif, en particulier pour la granulation de rubans de matière synthétique

(43) Veröffentlichungstag der Anmeldung: 11.07.1990
(73) Patentinhaber: Hench, Hans, D-79594 Inzlingen (DE)
(72) Erfinder: Hench, Hans, D-79594 Inzlingen (DE)
(74) Vertreter: Rüger, Rudolf, Dr.-Ing.

(56) Entgegenhaltungen:
- EP-A- 0 182 037
- EP-A- 0 266 447
- DE-A- 2 628 624
- DE-A- 3 301 919
- DE-C- 961 235
- FR-A- 2 194 514
- US-A- 1 700 333
- US-A- 4 009 742

## Beschreibung

Die Erfindung betrifft ein rundlaufendes Schneidwerkzeug, insbesondere zum Stranggranulieren von Kunststoffen, mit den Merkmalen des Oberbegriffs des Patentanspruchs 1.

Beim Stranggranulieren sind die aus Keramik, Stellit oder Hartmetall bestehenden Schneidelemente, insbesondere bei der Verarbeitung von füllstoffhaltigen Kunststoffen, hohen Beanspruchungen und starkem Verschleiß unterworfen. Insofern ist es notwendig, die Schneidelemente des Schneidwerkzeuges austauschbar zu gestalten, damit die abgearbeiteten Schneidelemente einzeln erneuert werden können.

Derartige Schneidelemente gibt es in vielfältigen Ausführungsformen. Beispielsweise gehört es durch die europäische Patentanmeldung EP-A-344 348 nach Artikel 54(3) zum Stand der Technik, mittels eines Exzenters eine Seitenwand der Längsnut, in der das jeweilige Schneidelement gehalten ist, entgegen der Rotationsrichtung in Richtung auf das Schneidelement zu pressen. Eine derartige Anordnung ist sehr wirksam, allerdings sind in diesem Fall die auftretenden Schnittkräfte den Klemmkräften entgegen gerichtet, so daß eine besonders stabile Klemmung erforderlich ist.

Aus der US-PS 3 887 975 ist ein Nutenfräser mit relativ schmalen Schneideinsätzen bekannt, bei dem die etwa parallelogrammförmig gestalteten, wendbaren Schneideinsätze in gleichen Abständen verteilt auf dem Umfang einer kreisrunden Scheibe in parallelwandig begrenzten Ausnehmungen angeordnet sind.

Im Bereich der in Drehrichtung des Nutenfräsers voreilenden Wand jeder Ausnehmung ist ein Exzenter in die Ausnehmung einschwenkbar, der in eine entsprechend gestaltete Vertiefung in dem Schneideinsatz eingreift. Aufgrund der geringen Breite der Schneideinsätze liegen hier jedoch andere Spannverhältnisse vor, wie bei den wesentlich breiteren Schneidwerkzeugen, wie sie zum Stranggranulieren von Kunststoffen verwendet werden.

Bei dieser bekannten Anordnung wird der Schneideinsatz in radialer Richtung mit seiner jeweils unbenutzten Freifläche gegen den Boden der Ausnehmung verspannt. Da jedoch Verschleißerscheinungen an der Freifläche des in umgeschlagener Stellung eingesetzten Schneideinsatzes die radiale Position der außenliegenden Schneide beeinflussen, kann nicht sichergestellt werden, daß die äußeren Schneiden der einzelnen umgeschlagenen Schneideinsätze auf dem gleichen Flugkreis liegen, wodurch sich eine unterschiedlich starke Belastung der Schneideinsätze ergibt.

Bei einem aus der US-A-1700 333 bekannten Fräswerkzeug, das den Oberbegriff des Anspruchs 1 entspricht, das mit nichtwendbaren Schneidelementen arbeitet, werden die Schneidelemente mit ihren den Schneiden abgewandten ebenen Stirnflächen gegen den Boden der sie aufnehmenden Nuten im Werkzeugkörper verklemmt. Bei gleichgestalteten Schneidelementen ist damit sichergestellt, daß deren Schneiden auf gleichem Flugkreis laufen. Zur Spannung der Schneidelemente werden aber im Querschnitt über einen Teil ihres Umfanges spiralig gestaltete Spannbolzen verwendet, die, in entsprechende durchgehende Bohrungen des Werkzeugkörpers eingesetzt, sich praktisch über die gesamte axiale Länge des Werkzeugkörpers erstrecken. Bei Schneidwerkzeugen mit größerer axialer Länge, wie sie bspw. zum Stranggranulieren von Kunststoffen verwendet werden, ergäben sich entsprechend lange Spannbolzen, die die Gefahr undefinierter Spannverhältnisse mit sich bringen.

Bei rundlaufenden Schneidwerkzeugen zum Stranggranulieren von Kunststoffen wurden deshalb schon für die Schneidelemente Klemmeinrichtungen verwendet, die jeweils eine über die Länge des Werkzeugkörpers durchgehende Bohrung aufweisen, in die von beiden Seiten her gleichgestalte Spannelemente eingesetzt sind. Diese Spannelemente sind als Spannhülsen ausgebildet, welche durch eine eingeschraubte Spannschraube gespreizt werden. Dabei läßt sich nicht vermeiden, daß sowohl die Spannhülse als auch die Spannschraube bei mehrfacher Betätigung einem gewissen Verschleiß ausgesetzt sind (EP-A1-0182 037).

Schließlich ist aus der FR-A-2194 514 noch ein Fräswerkzeug bekannt geworden, bei dem als Spannelement für das jeweilige Schneidelement ein Nocken verwendet wird, der stirnseitig mit zwei koaxialen, einander gegenüberliegenden Wellenzapfen kleineren Durchmessers versehen ist, mittels derer er in entsprechenden Teilen einer Stufenbohrung in dem Werkzeugkörper drehbar gelagert ist. Abgesehen davon, daß für jedes Schneidelement lediglich ein einziges solches Spannelement eingesetzt wird, erfordert diese Konstruktion die Verwendung eines zusätzlichen Lagerringes, der in den Abschnitt größeren Durchmessers der Stufenbohrung nach dem Einsetzen des Nockens eingepreßt werden muß.

Aufgabe der Erfindung ist es daher, ein Schneidwerkzeug der oben genannten Art zu schaffen, bei dem die Schneidelemente in dem Werkzeugkörper besonders stabil gehalten sowie auf einfache Weise genau maßhaltig montierbar und demontierbar sind, und das sich durch eine besonders rationelle Herstellung auszeichnet.

Zur Lösung dieser Aufgabe weist das eingangs genannte Schneidwerkzeug die Merkmale des kennzeichnenden Teils des Patentanspruchs 1 auf.

Bei diesem Schneidwerkzeug ist durch den Anschlag, der zusammen mit dem Widerlager die radiale Lage des Schneidelementes bestimmt, sichergestellt, daß die Schneiden aller Schneidelemente nach der Montage ohne größeres Justieren auf einer im wesentlichen zylindrischen Mantelfäche liegen. Die genau maßhaltige Lage aller Schneidelemente wird demnach ausschließlich durch die Anschläge und die zugehörigen Widerlager in den Längsnuten erzielt; ein Nachschleifen der Schneiden, oder eine besondere Gestalt der Schneiden hat auf die radiale Lage der jeweils außenliegenden Schneide keinen Einfluß.

Das in Rotationsrichtung vor dem Schneidelement liegende Exzentermittel bewirkt, daß die an dem Schneidelement angreifenden Schnittkräfte und die Haltekräfte des Exzentermittels in die gleiche Richtung wirken. Damit ist es ausgeschlossen, daß die Schnittkräfte und die Haltekräfte einander entgegenwirken und sich gegebenenfalls aufheben. Dies hätte die Gefahr eines Heraustragens der einzelnen Schneidelemente aus der Längsnut aufgrund der im Betrieb herrschenden Fliehkraft zur Folge.

Vorteilhafte Weiterbildungen des erfindungsgemäßen Schneidwerkzeuges sind Gegenstand von Unteransprüchen.

In der Zeichnung sind Ausführungsbeispiele des Gegenstandes der Erfindung dargestellt. Es zeigen:
- Fig. 1: ein Schneidwerkzeug gemäß der Erfindung in einem Ausschnitt im Bereich zweier aufeinanderfolgender Schneidelemente im Querschnitt,
- Fig. 2: ein Schneidwerkzeug gemaß der Erfindung in einem Ausschnit in einer Seitenansicht, und in einer anderen Ausführungsform,
- Fig. 3: das Schneidwerkzeug nach Fig. 1 in einem Längsschnitt und in einem anderen Maßstab,
- Fig. 4: ein Schneidwerkzeug gemäß der Erfindung in einer weiteren Ausführungsform mit "käfigartiger Ausbildung" in einer schematischen Seitenansicht, teilweise aufgeschnitten und im Ausschnitt,
- Fig. 5: zwei Aufnahmeelemente des Schneidwerkzeuges nach Fig. 4 für die Schneidelemente in einer stirnseitigen Ansicht,
- Fig. 6: zwei weitere Ausführungsformen des Schneidwerkzeuges gemäß der Erfindung in einem Ausschnitt im Querschnitt, und
- Fig. 7: das erfindungsgemäße Schneidwerkzeug mit einer Zuführeinrichtung für das zu granulierende Kunststoffmaterial in einer Draufsicht und in einem anderen Maßstab.

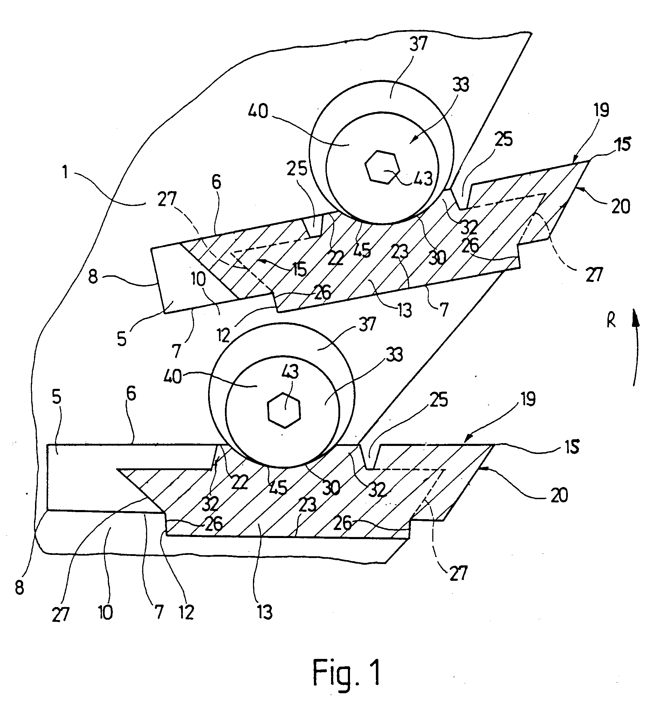

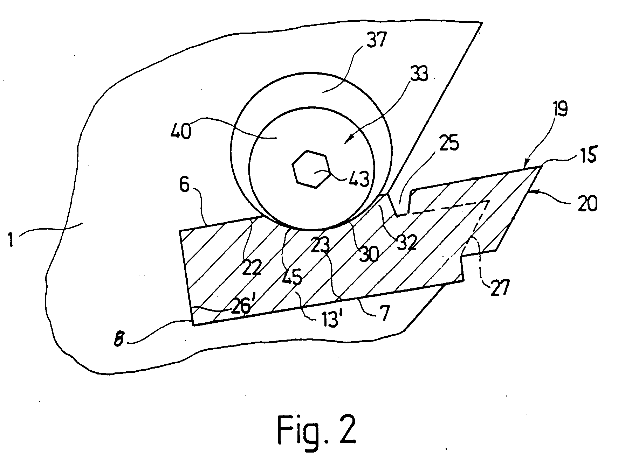

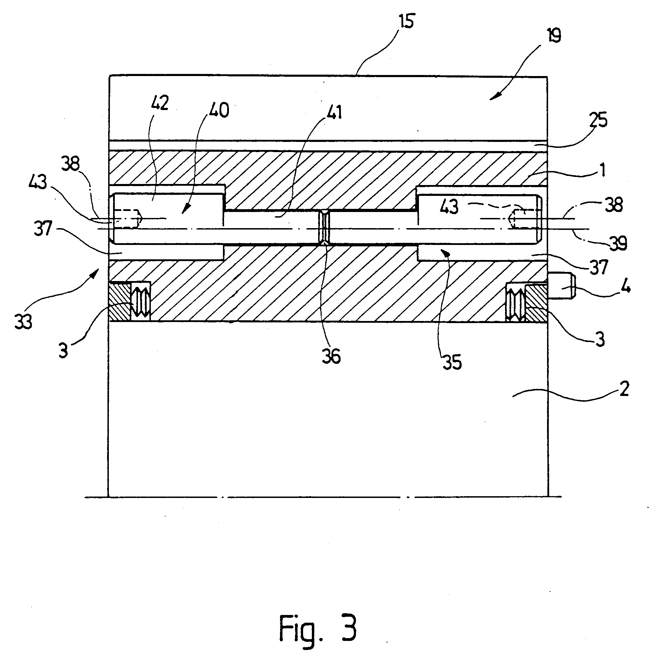

Das in Fig. 1 und 2 in zwei unterschiedlichen Ausführungsformen dargestellte Schneidwerkzeug weist einen in Fig. 3 veranschaulichten massiven zylindrischen Werkzeugkörper 1 aus Stahl auf, der mit einer koaxialen durchgehenden Nabenbohrung 2 versehen ist, in deren Bereich bei 3 angesetzte Ringspannelemente zur drehfesten Verbindung des Werkzeugkörpers 1 mit einer nicht weiter dargestellten Welle vorgesehen sind. Stirnseitig angeordnete Mitnehmerzapfen 4, die in entsprechende stirnseitige Bohrungen eines anschließenden Werkzeugkörpers 1 eingreifen, gestatten es, mehrere der beschriebenen Schneidwerkzeuge zu einer Schneidwalze größerer axialer Länge zusammen zu setzen.

Am Umfang des Werkzeugkörpers 1 sind in gleichen Abständen verteilt angeordnete Längsnuten 5 ausgebildet, die sich über die gesamte axiale Länge des Werkzeugkörpers 1 durchgehend erstrecken und die zu der jeweils zugeordneten, die Drehachse des Werkzeugkörpers 1 enthaltenden Radialebene unter Einschluß eines Winkels von etwa 2° bis 3° schräg verlaufen, um damit die Geräuschbildung beim Stranggranuliervorgang zu vermindern. Jede der Längsnuten 5 weist in der aus Fig. 1 ersichtlichen Weise zwei einander gegenüberliegende Seitenwände 6 und 7 auf, die von einem mit 8 bezeichneten Nutengrund ausgehen. Die beiden Seitenwände 6 und 7 verlaufen parallel zueinander. Dabei weist bei der Ausführungsform nach Fig. 1 die Seitenwand 7 einen vom Nutengrund 8 ausgehenden rechtwinkligen stufenförmigen Absatz 10 auf, so daß ein Widerlager 12 gebildet ist, gegen das sich die nachstehend beschriebenen Schneidelemente 13,in radialer Richtung genau maßhaltig in der Längsnut 5 positioniert,abstützen.

Bei der Ausführungsform nach Fig. 2 ist die radiale Tiefe der Längsnut 5 geringer, so daß der Nutengrund 8 auf der gleichen Höhe verläuft wie bei der Ausführungsform nach Fig. 1 der das Widerlager 12 bildende Absatz 10. Der Absatz 10 der Fig. 1 ist weggelassen.

In die Längsnuten 5 der Ausführungsform nach Fig. 1 sind Schneidelemente 13 eingeschoben, die eine im wesentlichen trapezförmige Querschnittsgestalt aufweisen und umschlagbar, d.h. mit je zwei nacheinander abarbeitbaren Schneiden 15 ausgestattet sind. Jedes dieser Schneidelemente besteht z.B. aus Hartmetall, Keramik oder Stellit und trägt im Bereich jeder Schneide 15 jeweils eine Spanfläche 19 sowie eine Freifläche 20. Die Spanfläche 19 und die Freifläche 20 sind unter einem spitzen Winkel von beispielsweise etwa 35° zueinander angeordnet. Die Spanfläche 19 ist ein Teil einer der breiteren parallel zueinander verlaufenden Hauptseitenflächen 22 und 23 des Schneidelementes 13. Die von der Schneide 15 entfernt liegenden freien Kanten der Spanfläche 19 und der Freifläche 20 sind jeweils freigestellt. So entsteht am von der Schneidkante 15 abliegenden Ende der Spanfläche 19 ein längsverlaufender Schlitz 25, der das Nachschleifen der Schneidelemente 13 erleichtert. Sobald ein Schneidelement 13 vollständig bis zu einer bei 27 angedeuteten Grenze abgearbeitet ist, wird es gewendet (siehe das untere, teilweise abgearbeitete Schneidelement 13 in Fig. 1).

An jedem Schneidelement 13 sind auf seiner der hinteren Nutenseitenwand 7 zugeordneten Hauptseitenfläche 23 zwei parallele, rechtwinklig verlaufende Anschläge 26 angeformt. Bei in die Längsnut 5 eingesetztem Schneidelement 13 ist dieses mit seinem entsprechenden Anschlag 26 auf dem zugeordneten Widerlager 12 abgestützt und damit genau positioniert. Dabei ist sichergestellt, daß die jeweils im Inneren der Längsnut 5 liegende Schneidkante 15 den Nutengrund 8 nicht berührt.

Das Schneidelement 13' bei der Ausführungsform nach Fig. 2 ist ersichtlich nur mit einer Schneide 15 ausgestaltet, also nicht umschlagbar. Das Schneidelement 13' ist an seiner im Inneren der Längsnut 5 liegenden Schmalseite 26', die bei dieser Ausführungsform rechtwinklig zu den Hauptseitenflächen 22, 23 verläuft, vollflächig auf dem ebenfalls ebenen Nutengrund 8 abgestützt, der hier das Widerlager bildet.

Im Mittelbereich jedes Schneidelementes 13, 13' ist aus der breiteren Hauptseitenfläche eine im Querschnitt kreissegmentförmige Ausnehmung 30 über die gesamte Länge des Schneidelementes ausgeformt. Die maximale Tiefe der Ausnehmung 30 entspricht etwa einem Fünftel der gesamten Querabmessung des Schneidelementes 13, 13'.

Bei der Ausführungsform nach Fig. 1 bleibt zu beiden Seiten neben der Ausnehmung 30 jeweils ein Steg 32 stehen, der bis zu dem ihm benachbarten Schlitz 25 reicht. Die oben beschriebenen Anschläge 26 sind genau symmetrisch zu der Ausnehmung 30 angeordnet, so daß beim Umschlagen des Schneidelementes 13 die Lage der Schneide 15 exakt maßhaltig bleibt.

Im Gegensatz dazu hat das Schneidelement 13' gemäß Fig. 2 nur an seiner nach außen gerichteten Seite einen Steg 32 neben der Ausnehmung 30, der bis zu dem Schlitz 25 reicht. Auf der anderen Seite der Ausnehmung 30 setzt sich die Hauptseitenfläche 22 eben bis zu der den Anschlag bildenden Schmalseite 26' fort. Die ebene hintere Hauptseitenfläche 23 liegt an der Seitenwand 7 der Längsnut 5 vollständig an.

Jeder Längsnut 5 ist eine eigene Klemmeinrichtung 33 für das in sie eingesetzte Schneidelement 13, 13' zugeordnet. Diese Klemmeinrichtung 33 ist zweigeteilt und liegt in Rotationsrichtung R des Werkzeugkörpers 1, gesehen vor der Längsnut 5 (siehe Fig. 1). Sie ist zweigeteilt und spiegelbildlich aufgebaut, so daß es ausreicht, einen Teil detailliert zu beschreiben:

Wie aus Fig. 3 zu ersehen, verläuft parallel zu jeder Längsnut 5 in dem Werkzeugkörper 1 eine durchgehende stufenbohrung 35, die einen innenliegenden ersten zylindrischen Bohrungsteil 36 aufweist, an den sich im Bereich beider Stirnseiten des Werkzeugkörpers 1 jeweils eine exzentrische Sackbohrung oder Ausdrehung 37 mit größerem Durchmesser anschließt, deren Achse 38 gegenüber der Achse 39 des ersten Bohrungsteiles 36 seitlich versetzt ist. In diese Stufenbohrung 35 sind von beiden Stirnseiten her zwei gleichgestaltete und als Exzentermittel ausgebildete Spannelemente 40 eingesetzt.

Jedes der Spannelemente 40 weist einen in dem ersten Bohrungsteil 36 drehbar gelagerten zylindrischen Lagerteil 41 auf, an den sich stirnseitig ein zylindrisches Exzenterteil 42 anschließt, das in der Sackbohrung oder Ausdrehung 37 liegt. Ein in dem Exzenterteil 42 stirnseitig außenliegend angeordneter Innensechskant 43 gestattet es, das Spannelement 40 um die Drehachse 39 zu verdrehen.

Die zylindrische Sackbohrung oder Ausdrehung 37 schneidet über ihre Länge die Längsnut. Der Durchmesser des gedachten Kreises, der die kreissegmentförmige Ausnehmung 30 an dem Schneidelement 13, 13' definiert und der Durchmesser der Sackbohrung 37 sind hier gleich gewählt, so daß bei in der Längsnut 5 eingeschobenem Schneidelement 13, 13' die Ausnehmung 30 den fehlenden Abschnitt der Sackbohrung 37 ergänzt.

Die Exzentrität des Exzenterteils 42 bezüglich des Lagerteiles 41 und der Durchmesser des Exzenterteils 42 bzw. der Sackbohrung 37 sind derart gewählt, daß bei einer Umdrehung von etwa 180° das Exzenterteil 42 vollständig in die Ausnehmung 30 hingeschwenkt wird. Das Exzenterteil 42 kommt dabei in der Ausnehmung 30 des Schneidelementes 13, 13' im Bereich einer Klemmstelle 45 zur Anlage. Es wird beim Festziehen des Spannelementes in dieser Position selbsthemmend arretiert, wobei das Schneidelement 13, 13' im Bereich seiner hinteren Hauptseitenfläche 23 fest gegen die Seitenwand 7 der Längsnut 5 und im Bereich des Anschlages 26 gegen das Widerlager 12 (Fig. 1) bzw. seiner Schmalseite 26' gegen den Nutengrund 8 (Fig. 2) gepreßt wird.

Die Lage der Klemmstelle 45 liegt - Verschwenkung des Exzenterteiles 42 im Uhrzeigersinn (Fig. 1) voraussetzend - links von dem tiefsten Punkt der Ausnehmung 30.

Zum Auswechseln eines Schneidelementes 13, 13' ist es lediglich erforderlich, die beiden Spannelemente 40 aus der Klemmstellung (siehe Fig. 1) so weit gegen den Uhrzeigersinn zu verdrehen, daß das Exzenterteil 42 aus der Ausnehmung 30 vollständig herausgeschwenkt ist, womit das Schneidelement ohne Schwierigkeiten aus der Längsnut 5 etwa radial zur Längsachse des Werkzeugkörpers 1 herausgezogen werden kann.

Um eine Vorstellung von den tatsächlichen Größen- und Betriebsverhältnissen zu vermitteln, sei erwähnt, daß der Werkzeugkörper 1 mit etwa 700 bis 1000 Umdrehungen pro Minute rotiert und bei einem Durchmesser des Werkzeugkörpers 1 von etwa 80 mm bis 120 mm längs dessen Umfang 24 Schneidelemente 13 verteilt angeordnet sind. Diese Angabe ist jedoch lediglich beispielhaft, in gleicher Weise können bei einem Durchmesser von etwa 200 mm des Werkzeugkörpers 1 auch beispielsweise 32 Schneidelemente 13 zum Einsatz kommen.

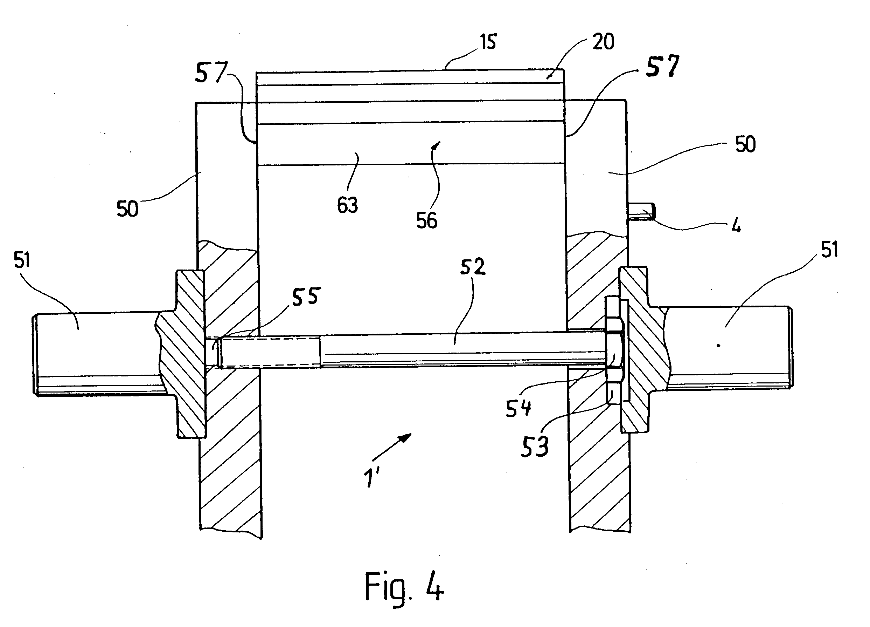

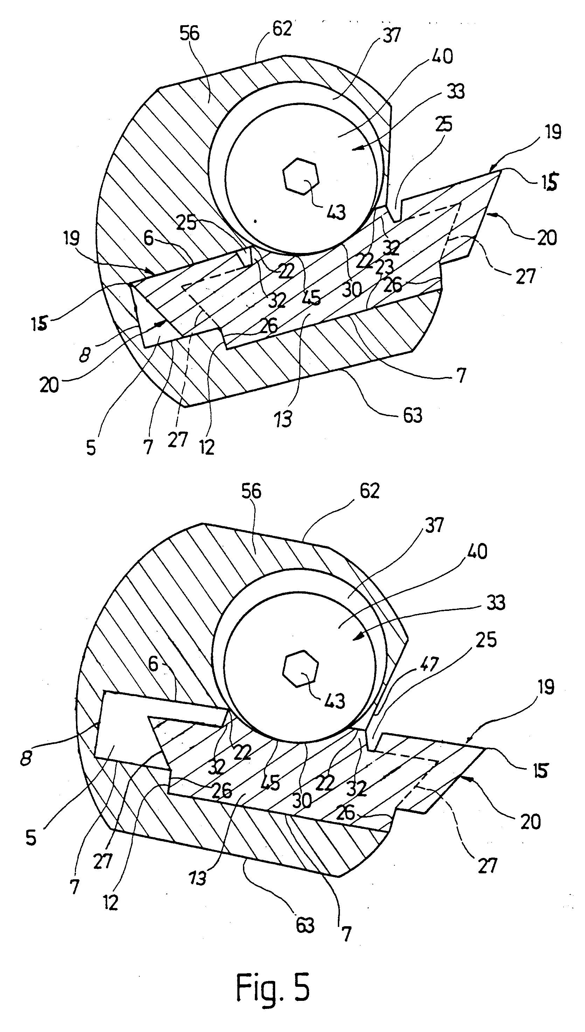

In den Fig. 4 und 5 ist eine weitere Ausführungsform des mit 1' bezeichneten Werkzeugkörpers dargestellt, bei dem zwischen zwei Lagerplatten 50 längs des Umfangs im Abstand zueinander angeordnete Aufnahmeelemente 56 für die Schneidelemente 13 aufgenommen sind. Die Aufnahmeelemente 56 haben eine stab- oder bolzenförmige Gestalt und bilden zwischen sich Freiräume, durch die das Granulat nach unten in einen nicht dargestellten Auffangschacht fallen kann.

Um die zwischen den Lagerplatten 50 in nicht weiter dargestellter Weise verdrehsicher gehaltenen Aufnahmeelemente 56 spielfrei zu verspannen, ist ein durch die Längsachse des Werkzeugkörpers 1' gehender Spannbolzen 52 vorgesehen. Dazu weist die in Fig. 4 rechte Lagerplatte 50 eine durchgehende Stufenbohrung 53 auf, durch die der Spannbolzen 52 durchgesteckt ist und in der der Kopf 54 des Spannbolzens 52 aufgenommen ist. Die in Fig. 4 linke Lagerplatte 50 hat ein Gewindeloch 55, in das der Spannbolzen 52 eingeschraubt ist. Beim Festziehen des Spannbolzens 52 werden die beiden Lagerplatten 50 gegen Stirnseitenbereiche 57 der Aufnahmeelemente 56 gepreßt, die formschlüssig in entsprechenden Ausnehmungen der Lagerplatten 50 aufgenommen oder mittels nicht weiter dargestellter Halterungselemente an diesen formschlüssig gehaltert sind. Auf den Außenseiten tragen die Lagerplatten 50 jeweils einen koaxialen Nabenstummel 51 zur Lagerung und zum Antrieb des Schneidwerkzeuges.

In Fig. 5 sind zwei Aufnahmeelemente 56 im Querschnitt veranschaulicht. Die Klemmung der Schneidelemente 13 erfolgt mit einer Klemmvorrichtung 33, wie sie anhand von Fig. 1 bereits beschrieben wurde. Gleiche Teile sind deshalb entsprechend den vorhergehenden Figuren mit gleichen Bezugszeichen versehen und nicht noch einmal beschrieben.

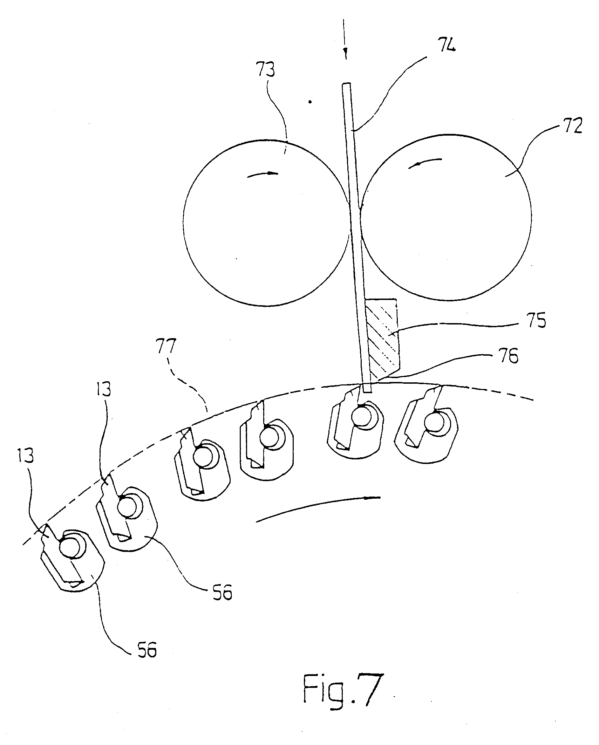

Um einen unbehinderten Durchtritt des Granulats zwischen den ansonsten etwa zylindrischen Aufnabmeelementen 56 zu gewährleisten, sind diese in der aus Fig. 5 ersichtlichen Weise jeweils mit zwei einander gegenüberliegenden ebenen Flächen 62 und 63 ausgebildet, die achsparallel ausgerichtet jedes Aufnahmeelement 56 seitlich begrenzen. Wie Fig. 7 zeigt, werden damit jeweils zwischen zwei Aufnahmeelementen 56 über deren Länge breite Durchtrittsräume für das anfallende Granulat gebildet.

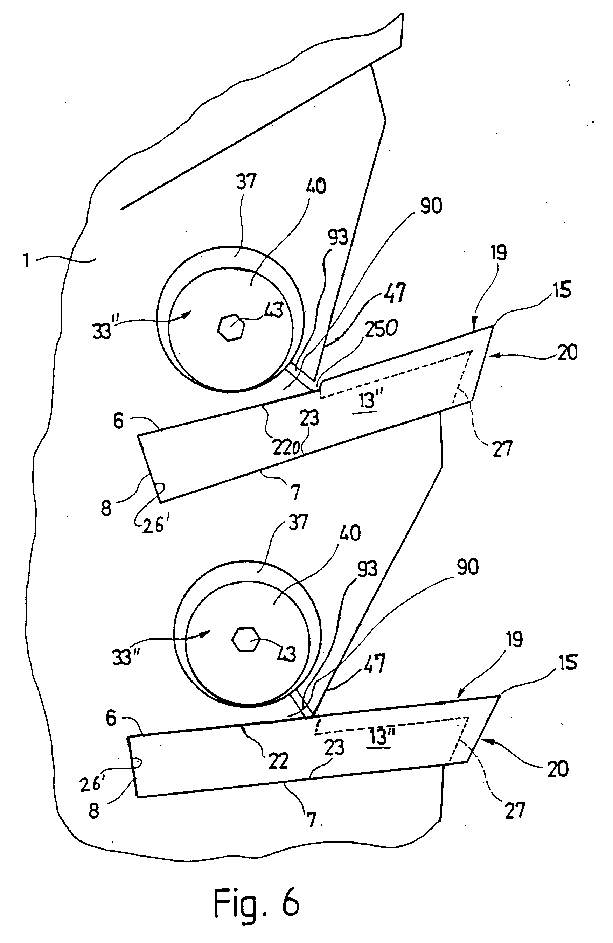

Zwei weitere Ausführungsmöglichkeiten für die Klemmeinrichtung 33, die Längsnuten 5 und die entsprechenden Schneidelemente 13'' sind in Fig. 6 veranschaulicht.

Auch hier sind gleiche Teile mit gleichen Bezugszeichen wie in den vorhergehenden Figuren versehen und nachstehend nicht noch einmal beschrieben.

Bei der oberen Schneidenanordnung der Fig. 6 schließt die in Rotationsrichtung des Schneidwerkzeuges vorn liegende Seitenwand 6 der Längsnut 5 mit dem ebenen Nutengrund 8 einen Winkel von etwa 88° ein, während die hintere Seitenwand 7 im rechten Winkel zu dem Nutengrund 8 steht. Der Querschnitt der Längsnut 5 verjüngt sich somit von der Achse des Werkzeugkörpers 1 aus gesehen nach außen. In diese sich nach außen hin verjüngende Längsnut 5 ist ein Schneidelement 13'' eingepaßt, das im Bereich der Längsnut 5 den gleichen sich verjüngenden Querschnitt aufweist. Dies ist dadurch erreicht, daß aus dem in der Grundform parallelflankig ausgebildeten Schneidelement 13'' in seiner Hauptseitenwand 22 eine winklige Ausnehmung 220 schrägliegend ausgefräst ist,die einen Winkel von etwa 2° mit der Hauptseitenwand 22 einschließt. Diese Ausnehmung 220 ragt bei in die Längsnut 5 eingesetztem Schneidelement 13'' etwas über den Rand der Längsnut 5 vor, so daß ein Absatz 250 entsteht, der den gleichen Zweck wie der Längsschlitz 25 beispielsweise in Fig. 1 erfüllt. Die Spanfläche 19 ist parallel zu der hinteren Hauptseitenfläche 23 ausgerichtet. Die Seitenwand 7 der Längsnut 5 erstreckt sich etwa in den Bereich der gestrichelt eingezeichneten Grenzlinie 27 bis zu der die Schneidelemente 13'' abgearbeitet werden können und stützt das jeweilige Schneidelement 13'' gegen den Schnittdruck ab.

Die Klemmeinrichtung 33'', deren Spannelemente 40 prinzipiell den gleichen Aufbau haben wie bei den beiden oben erläuterten Ausführungsformen, ist insoweit abweichend gestaltet,als die Spannelemente 40 jeweils nicht in eine entsprechende Ausnehmung in dem Schneidelement 13'' eingreifen, sondern ein Klemmteil 90 von vorne gegen die Hauptseitenfläche 22 im Bereich der Ausnehmung 220 des Schneidelementes 13'' anpressen. Das Klemmteil 90 ist ein Teil des Werkzeugkörpers 1,; es ist durch einen Spalt 93 einseitig begrenzt, der sich von der Außenumfangsfläche 47 des Werkzeugkörpers 1 über dessen ganze Länge bis in den Bereich der jeweiligen Sackbohrungen 37 radial erstreckt. Beim Verdrehen der Spannelemente 40 wird das Klemmteil 90 elastisch um seine Wurzel verschwenkt und gegen die Hauptseitenfläche 22 des Schneidelementes 13'' angedrückt.

Die in der Fig. 6 unten gezeigte Schneidenanordnung hat eine parallelwandige Längsnut 5, in der ein entsprechend gestaltetes Schneidelement 13 aufgenommen ist, dessen Gestaltung im wesentlichen jener nach Fig. 2 entspricht, nur daß die kreissegmentförmige Ausnehmung 30 naturgemäß entfällt. Die Klemmung der Schneidelemente 13' in der Längsnut 5 erfolgt genauso wie bei der vorstehend beschriebenen Anordnung in Fig. 6 oben.

Es ist ohne weiteres möglich, die beiden in Fig. 6 gezeigten Schneidenanordnungen auch in Aufnahmeelementen 56, so wie in den Fig. 4, 5 dargestellt, zu verwenden und die Klemmung entsprechend auszubilden.

In Fig. 7 ist schließlich ein schematischer Ausschnitt einer Granuliermaschine veranschaulicht, bei der das erfindungsgemäße Schneidwerkzeug in der Ausführungsform nach den Fig. 4, 5 im Einsatz ist. Dabei ist der käfigartige Werkzeugkörper 1 der besseren Anschaulichkeit halber weggelassen.

Zwischen zwei gegensinnig laufenden Friktionswalzen 72, 73, von denen eine angetrieben ist, werden nebeneinander mehrere Kunststoffstränge 74 von außen radial in Richtung an das Schneidwerkzeug herangeführt. Die Kunststoffstränge 74 werden dabei über ein starr angeordnetes Messer 75 geschoben, dessen Schneide 76 in geringem Abstand zu dem Flugkreis 77 der umlaufenden Schneidelemente 13 verläuft und somit eine Schneidstelle bildet.

Das Granulat kann auch an mehreren solchen längs des Umfangs des Schneidwerkzeugs verteilt angeordneten Schneidstellen dem Schneidwerkzeug zugeführt werden, so daß jedes Schneidelement 13 an mehreren Stellen längs des Umfangs des Werkzeugkörpers 1' Schneidarbeit leistet. Damit ist bereits mit einem Schneidwerkzeug geringer Länge ein hoher Granulatdurchsatz erzielbar.

Je nach Vorschubgeschwindigkeit der Kunststoffstränge 74 bzw. dem Abstand der einzelnen Schneidelemente 13 voneinander sowie der Rotationsgeschwindigkeit des Schneidwerkzeuges werden unterschiedlich lange Granulatabschnitte von den Kunststoffsträngen 74 abgetrennt.

## Patentansprüche

1. Rundlaufendes Schneidwerkzeug, insbesondere zum Stranggranulieren von Kunststoffen, mit einem zylindrischen Werkzeugkörper (1, 1'), der eine Anzahl am Umfang gleichmäßig verteilt angeordneter Klemmeinrichtungen (33, 33') zur Aufnahme von sich im wesentlichen über die axiale Länge des Werkzeugkörpers erstreckenden länglichen Schneidelementen (13, 13', 13'') enthält, von denen jedes in einer Längsnut (5) der zugeordneten Klemmeinrichtung angeordnet und in der Längsnut (5) jeweils durch wenigstens ein arretierbares Exzentermittel (40) lösbar gehalten ist, wobei jedes der Schneidelemente einen von der Schneidengeometrie unabhängigen Anschlag (26, 26') aufweist, der zusammen mit einem im Innern der Längsnut (5) angeordneten Widerlager (12, 8) die radiale Lage des Schneidelementes bestimmt, und das Exzentermittel (40) in Rotationsrichtung des Schneidwerkzeuges vor dem zugehörigen Schneidelement angeordnet ist, dadurch gekennzeichnet, daß jede Klemmeinrichtung (33) eine über die Länge des Werkzeugkörpers (1, 1') durchgehende Stufenbohrung (35) mit zwei im Bereiche der Stirnseiten des Werkzeugkörpers angeordneten Bohrungsteilen (37) größeren Durchmessers aufweist und daß in die Stufenbohrung (35) von beiden Stirnseiten her als Exzentermittel zwei gleichgestaltete Spannelemente (40) eingesetzt sind, von denen jedes ein in einem innenliegenden ersten Teil (36) der Stufenbohrung drehbar gelagertes Lagerteil (41) und ein sich an dieses anschließendes Exzenterteil (42) aufweist, das in dem Bohrungsteil (37) größeren Durchmessers liegt.

2. Schneidwerkzeug nach Anspruch 1, dadurch gekennzeichnet, daß das Exzentermittel (40) in eine entsprechend geformte Ausnehmung (30) des Schneidelementes (13, 13') unter Bildung wenigstens einer gemeinsamen Anlagestelle (45) seitlich formschlüssig eingreift und unter Freigabe des Schneidelementes aus der Ausnehmung (30) herausschwenkbar ist.

3. Schneidwerkzeug nach Anspruch 1, dadurch gekennzeichnet, daß jede Längsnut (5) auf ihrer in Rotationsrichtung des Schneidwerkzeuges vorn liegende Seite zumindest über einen Teil ihrer Länge durch ein, eine entsprechende Seitenwand (6) der Längsnut (5) enthaltendes Klemmteil (90) begrenzt ist, das begrenzt beweglich an dem Werkzeugkörper (1) angeordnet und auf einer von der Längsnut (5) abgewandten Seite gegen das Exzentermittel (40) der zugehörigen Klemmeinrichtung (33, 33') abgestützt ist.

4. Schneidwerkzeug nach Anspruch 1, dadurch gekennzeichnet, daß das Schneidelement (13) eine im wesentlichen parallel flankig begrenzte oder trapezförmige Querschnittsgestalt aufweist, wobei seine beiden Hauptseitenflächen (22,23) im wesentlichen parallel zueinander ausgerichtet sind und gegebenenfalls wenigstens eine der Hauptseitenflächen (22) zumindest abschnittsweise als Spanflache (19) ausgebildet ist.

5. Schneidwerkzeug nach Anspruch 4, dadurch gekennzeichnet, daß der Anschlag (26,26') von einer der Hauptseitenflächen (23) winkelig abgehend ausgebildet ist, und sich wenigstens über einen Teil der Querabmessung des Schneidelementes (13) erstreckt.

6. Schneidwerkzeug nach Anspruch 5, dadurch gekennzeichnet, daß die Längsnut (5) gegenüber dem Schneidelement (13) so tief ist, daß durch das Widerlager (12), das sich an einer der Seitenwände (7) befindet, und den Anschlag (26) an dem Schneidelement (13) eine im Inneren der Längsnut (5) befindliche Schneidkante (15) gegenüber dem Nutengrund (8) der Längsnut (5) freigestellt ist.

7. Schneidwerkzeug nach Anspruch 5, dadurch gekennzeichnet, daß der Anschlag (26') sich über die gesamte Querabmessung des Schneidelementes (13) erstreckt und das Widerlager durch den Nutengrund (8) der Längsnut (5) gebildet ist.

8. Schneidwerkzeug nach Anspruch 2, dadurch gekennzeichnet, daß die Ausnehmung (30) des Schneidelementes (13) eine im wesentlichen kreissegmentförmige Querschnittsgestalt aufweist und eine maximale Tiefe von etwa 15 bis 35% der Querabmessung des Schneidelementes (13, 13') hat.

9. Schneidwerkzeug nach Anspruch 1 , dadurch gekennzeichnet, daß wenigstens eine Seitenwand (6,7) der Längsnut (5) in Richtung auf deren Nutengrund (8) geneigt ist.

10. Schneidwerkzeug nach Anspruch 9, dadurch gekennzeichnet, daß die in Rotationsrichtung des Schneidwerkzeuges (1) vorn liegende Seitenwand (6) mit dem Nutengrund wenigstens abschnittsweise einen Winkel von etwa 85°-88° einschließt.

11. Schneidwerkzeug nach Anspruch 9 oder 10, dadurch gekennzeichnet, daß wenigstens eine Hauptseitenfläche (22, 23) des Schneidelementes (13'') eine keilförmige Ausnehmung (250) aufweist, und daß die Querschnittsgestalt des Schneidelementes (13'') zumindest im Bereich der Längsnut (5) deren Querschnittsgestalt im wesentlichen entspricht.

12. Schneidwerkzeug nach einem der vorhergehenden Ansprüche, dadurch gekennzeichnet, daß die Schneidelemente (13) zusammen mit den zugehörigen Exzentermitteln (40) jeweils in eigenen, einen Teil des Werkzeugkörpers (1') bildenden Aufnahmeelementen (56) angeordnet sind und daß die stab- oder leistenförmigen Aufnahmeelemente (56) unter Freilassung von freien Zwischenräumen (Fig. 7) in gleichem Abstand von der Drehachse des Werkzeugkörpers (1) angeordnet sind.

13. Schneidwerkzeug nach Anspruch 12, dadurch gekennzeichnet, daß jedes Aufnahmeelement (56) zwei einander gegenüberliegende, im wesentlichen ebene Seitenflächen (62, 63) aufweisen und daß die Zwischenräume im wesentlichen von den Seitenflächen jeweils benachbarter Aufnahmeelemente seitlich begrenzt sind.

## Claims

1. Rotating cutter, in particular for granulating strands of plastic material, comprising a cylindrical cutter body (1, 1') containing a number of clamping devices (33, 33') uniformly distributed along the circumference for receiving elongate cutting elements (13, 13', 13'') which extend essentially over the axial length of said cutter body and each of which is arranged in a longitudinal groove (5) of said associated clamping device and is releasably held in said longitudinal groove (5) by at least one lockable eccentric means (40), each of said cutting elements having a stop (26, 26') which is independent of the cutter geometry and together with an abutment (12, 8) arranged inside said longitudinal groove (5) determines the radial position of said cutting element, and said eccentric means (40) being arranged in the direction of rotation of said cutter before the associated cutting element, characterized in that each clamping device (33) has a stepped bore (35) extending continuously over the length of said cutter body (1, 1') with two bore parts (37) of larger diameter arranged in the region of the end faces of said cutter body, and in that two clamping elements (40) of identical design are inserted as eccentric means in said stepped bore (35) from both end faces and each comprise a bearing part (41) rotatably mounted in an inwardly located first part (36) of said stepped bore and an eccentric part (42) adjoining said bearing part and lying in said bore part (37) of larger diameter.

2. Cutter as defined in claim 1, characterized in that said eccentric means (40) laterally engages in a positively connected manner a correspondingly shaped recess (30) of said cutting element (13, 13') thereby forming at least one common contact point (45) and is pivotable out of said recess (30) thereby releasing said cutting element.

3. Cutter as defined in claim 1, characterized in that each longitudinal groove (5) is delimited on its side that lies at the front in the direction of rotation of said cutter at least over part of its length by a clamping part (90) containing a corresponding side wall (6) of said longitudinal groove (5) and being arranged for limited movement on said cutter body (1) and supported on a side facing away from said longitudinal groove (5) against said eccentric means (40) of said associated clamping device (33, 33').

4. Cutter as defined in claim 1, characterized in that said cutting element (13) has a cross-sectional shape which is essentially delimited by parallel flanks or trapezoidal, its two main side faces (22, 23) being aligned essentially parallel to one another and, in the given circumstances, at least one of said main side faces (22) being designed at least section-wise as cutting surface (19).

5. Cutter as defined in claim 4, characterized in that said stop (26, 26') is designed so as to start at an angle from one of said main side faces (23) and extends at least over part of the transverse dimensions of said cutting element (13).

6. Cutter as defined in claim 5, characterized in that said longitudinal groove (5) is of such depth relative to said cutting element (13) that a cutting edge (15) located inside said longitudinal groove (5) is left free relative to the groove bottom (8) of said longitudinal groove (5) by said abutment (12) located on one of said side walls (7) and said stop (26) on said cutting element (13).

7. Cutter as defined in claim 5, characterized in that said stop (26') extends over the entire transverse dimensions of said cutting element (13) and said abutment is formed by said groove bottom (8) of said longitudinal groove (5).

8. Cutter as defined in claim 2, characterized in that said recess (30) of said cutting element (13) has a cross-section with essentially the shape of the segment of a circle and a maximum depth of approximately 15 to 35 % of the transverse dimensions of said cutting element (13, 13').

9. Cutter as defined in claim 1, characterized in that at least one side wall (6, 7) of said longitudinal groove (5) is inclined in the direction towards its groove bottom (8).

10. Cutter as defined in claim 9, characterized in that said side wall (6) located at the front in the direction of rotation of said cutter (1) includes with said groove bottom at least section-wise an angle of approximately 85° to 88°.

11. Cutter as defined in claim 9 or 10, characterized in that at least one main side face (22, 23) of said cutting element (13'') has a wedge-shaped recess (250), and in that the cross-sectional shape of said cutting element (13'') corresponds essentially at least in the region of said longitudinal groove (5) to its cross-sectional shape.

12. Cutter as defined in one of the preceding claims, characterized in that said cutting elements (13) together with said associated eccentric means (40) are respectively arranged in their own receiving elements (56) forming part of said cutter body (1'), and in that said rod- or bar-shaped receiving elements (56) are arranged at the same spacing from the axis of rotation of said cutter body (1) thereby leaving free spaces between them (Figure 7).

13. Cutter as defined in claim 12, characterized in that each receiving element (56) has two essentially flat side faces (62, 63) arranged opposite one another, and in that said spaces are essentially laterally delimited by said side faces of respective adjacent receiving elements.

## Revendications

1. Outil de coupe rotatif, destiné en particulier à la granulation de boudins de matière plastique, comportant un corps d'outil (1, 1') cylindrique qui présente un certain nombre de dispositifs de serrage (33, 33') régulièrement répartis à sa périphérie destinés à recevoir des organes de coupe (13, 13', 13'') allongés, qui s'étendent sensiblement sur la longueur axiale du corps, sont disposés chacun dans une rainure longitudinale (5) du dispositif se serrage correspondant et sont maintenus avec possibilité de démontage dans la rainure (5) par au moins un moyen à excentrique (40) pouvant être bloqué, chaque organe de coupe présentant une butée (26, 26') indépendante de la géométrie de la lame qui, avec une contre-butée (12, 8) à l'intérieur de la rainure longitudinale (5), détermine la position radiale de l'organe de coupe et le moyen à excentrique (40) étant disposé avant l'organe de coupe associé, dans la direction de rotation de l'outil de coupe, caractérisé par le fait que chaque dispositif de serrage (33) comporte un perçage étagé (35) traversant qui s'étend toute la longueur du corps d'outil (1, 1'), avec deux parties (37) de diamètre plus grand agencées dans la région des faces frontales du corps d'outil, et par le fait que deux éléments de serrage (40) identiques sont introduits en tant que moyens à excentrique dans le perçage étagé (35), à partir des deux faces frontales, éléments qui comportent chacun une partie palier (41) montée avec possibilité de rotation dans une première partie (36) interne du perçage étagé et une partie excentrique (42) qui fait suite à la première et est située dans la partie de perçage (37) de diamètre plus grand.

2. Outil de coupe selon la revendication 1, caractérisé par le fait que le moyen à excentrique (40) pénètre latéralement par complémentarité de forme dans un évidement (30) de forme appropriée de l'organe de coupe (13, 13') en formant au moins un point de contact (45) commun et peut pivoter vers l'extérieur en libérant l'organe de coupe dans le logement (30).

3. Outil de coupe selon la revendication 1, caractérisé par le fait que chaque rainure longitudinale (5), sur son côté situé en avant dans la direction de rotation de l'outil de coupe, est limitée sur une partie au moins de sa longueur, par une partie de serrage (90) englobant une paroi latérale (6) correspondante de la rainure longitudinale (5) qui est agencé sur le corps d'outil (1) avec possibilité de déplacement limité et, par une face éloignée de la rainure (5), prend appui sur le moyen à excentrique (40) du dispositif de serrage (33, 33') correspondant.

4. Outil de coupe selon la revendication 1, caractérisé par le fait que l'organe de coupe (13), en section droite transversale, a une forme qui est délimitée par des flancs sensiblement parallèles ou en trapèze, ses deux faces latérales principales (22, 23) étant sensiblement parallèles entre elles et éventuellement, au moins une face latérale principale (22) étant au moins partiellement agencée sous forme de face de coupe (19).

5. Outil de coupe selon la revendication 4, caractérisé par le fait que la butée (26, 26') forme un angle à partir de l'une des faces latérales principales (23) et s'étend sur une partie au moins de la dimension transversale de l'organe de coupe (13).

6. Outil de coupe selon la revendication 5, caractérisé par le fait que la rainure longitudinale (5) a une profondeur par rapport à l'organe de coupe (13) telle que la contre-butée (12) qui se trouve sur une des parois latérales (7) et la butée (26) sur l'organe de coupe (13) laissent dégagée par rapport au fond (8) de la rainure longitudinale (5) une arête de coupe (15) qui se trouve à l'intérieur de ladite rainure (5).

7. Outil de coupe selon la revendication 5, caractérisé par le fait que la butée (26') s'étend sur l'ensemble de la dimension transversale de l'organe de coupe (13) et la contre-butée est formée par le fond (8) de la rainure longitudinale (5).

8. Outil de coupe selon la revendication 2, caractérisé par le fait que l'évidement (30) de l'organe de coupe (13) a sensiblement une forme de segment de cercle et une profondeur maximale d'environ 15 à 35 % de la dimension transversale de l'organe de coupe (13, 13').

9. Outil de coupe selon la revendication 1, caractérisé par le fait qu'une paroi latérale (6, 7) au moins de la rainure longitudinale (5) est inclinée en direction du fond (8) de ladite rainure.

10. Outil de coupe selon la revendication 9, caractérisé par le fait que la paroi latérale (6) située en avant dans la direction de rotation de l'outil de coupe (1) forme, par endroits au moins, un angle d'environ 85 - 88 ° avec le fond de la rainure.

11. Outil de coupe selon la revendication 9 ou 10, caractérisé par le fait que l'une des faces latérales principales (22, 23) au moins de l'organe de coupe (13'') présente un évidement (250) en forme de coin et par le fait que la forme en section droite transversale de l'organe de coupe (13''), dans la région au moins de la rainure longitudinale (5), correspond sensiblement à la forme en section droite transversale de ladite rainure.

12. Outil de coupe selon l'une des revendications précédentes, caractérisé par le fait que les organes de coupe (13) et les moyens à excentrique (40) associés sont disposés dans des éléments de réception (56) propres qui forment une partie du corps d'outil (1') et par le fait que les éléments de réception (56) en forme de barreau ou de réglette sont disposés à même distance de l'axe de rotation du corps d'outil (1) en laissant libres des espaces intermédiaires (figure 7).

13. Outil de coupe selon la revendication 12, caractérisé par le fait que chaque élément de réception (56) présente deux faces latérales (62, 63) sensiblement planes situées en vis-à-vis et par le fait que les espaces intermédiaires sont délimités latéralement par les faces latérales d'éléments de réception voisins.
